# EUROPEAN PATENT SPECIFICATION

(11) **EP 1 650 690 B1**
(45) Date of publication and mention of the grant of the patent: **19.04.2017**
(21) Application number: 05022758.6
(22) Date of filing: 19.10.2005
(51) Int. Cl.: G06F 21/00, H04M 1/66, H04M 1/725, H04M 1/247

(54) **Improvements in personal data security of mobile communication device**
Verbesserung der persönlichen Datensicherheit in einem mobilen Kommunikationsgerät
Amélioration de la sécurité de données personelles dans un appareil mobile de communication

(30) Priority: 21.10.2004 GB 0423441
(43) Date of publication of application: 26.04.2006
(73) Proprietor: T-Mobile International AG, 53227 Bonn (DE)
(72) Inventor: Ahmed, Saayman, London E12 5PW (GB)
(74) Representative: Riebling, Peter

(56) References cited:
- EP-A- 1 074 906
- EP-A- 1 107 627
- US-A1- 2001 039 620
- US-A1- 2003 174 839

## Description

The invention generally relates to mobile communication devices and particularly to improvements in personal data security of mobile communication devices.

Mobile communication devices, such as mobile phones, etc., consist of a mobile equipment, i.e. the terminal, and a smart card called the Subscriber Identity Module (SIM). The SIM provides personal mobility, so that the user can have access to subscribed services irrespective of a specific terminal. By inserting the SIM card into another GSM terminal, the user is able to receive calls at that terminal, make calls from that terminal, and receive other subscribed services.

Both, the mobile equipment and the SIM comprise storage space where the user can store personal data and information. The SIM generally includes a microprocessor and small memory chip that can store between 16k and 64k of data which the user can use to store SMS text messages and address book information.

Modern mobile equipments include a user memory with a storage capacity between several hundred kB and several MB where the user can store multimedia data such as MMS messages, photos, video clips, music files, etc. Most mobile phones nowadays often include a digital camera that allows for still photos or motion clips to be taken and stored in the user memory. The majority of mobile phones have their user memory divided in memory sections called folders (or Album) that can store these photos or clips. This is good functionality but lacks to provide the access security that might be required by users to protect their private information. For example, it is a common practice that most people leave their phones laying around the house (or any other public place) making the folders in the mobile phone containing the photos and movie clips accessible to other unauthorized people leading to invading of privacy.

According to the preamble of claim 1, each of the prior art documents US-A-2003/174839, EP-A-1 074 906 and EP-A-1 107 627 disclose a method for securing personal data in a mobile communication device, the mobile communication device comprises a control processor, a transceiver unit, an user interface and an user memory for storing user data. The user memory is dividable into several memory sections, wherein a password is assignable to the user memory or memory sections of it.

KR-A-10 2004 0041219 discloses a method for limiting the access to a mobile communications terminal by providing a password protection for selected menus of the mobile communications terminal.
WO 95/04328 A1 teaches a device and method for IC cards, wherein on the IC card there is stored a menu system routing which can be executed on the device to enable a user to operate the menu. Any of the menu choices can be password (PIN) protected.
Bedienungsanleitung fur Nokia 9110i Communicator, 9357266 Issue 1, Elektronische Bedienungsanleitung freigegeben gemaß "Nokia Bedienungsanleitungen, Richtlinien und Bedingungen, 7. Juni 1998, Copyright Nokia Mobile Phones 1995-2000, discloses e.g. on pages 130, 163-164, 168-169, 191 that a PIN2 code is necessary for operating some functions supported by the SIM card, e.g. functions for managing the communication costs.

It is the object of the present invention, to improve the personal data security of mobile communication devices, such that the personal information of the user may not be available to unauthorised people.

This object is achieved by providing a method and mobile communication device according to the independent claims.

Preferred embodiments and advantageous features of the invention are disclosed in the dependent claims.

The method according to the present invention provides a password protection of folders and subfolders in mobile phone / devices user memory, either the mobile equipment memory or SIM memory, or both The present invention provides a password management functionality within the mobile phones that allow the folders and sub-folders of the user memory in a mobile phone / device to be password protected so that it can only be accessed by the rightful owner even if someone else got hold of the phone. Basically the phone should start a dialog with the user and ask the user if he/she wants to password protect the folder when it is created. The password can be in the form of ASCII symbols or numeral digits.

To take it one step further, the same password protection mechanism can be applied to SMS or MMS menus in the mobile phones / devices.

The construction and method of operation of the invention, together with additional objects and advantages thereof, will be best understood from the following description of a specific embodiment when read in connection with the accompanying drawings.

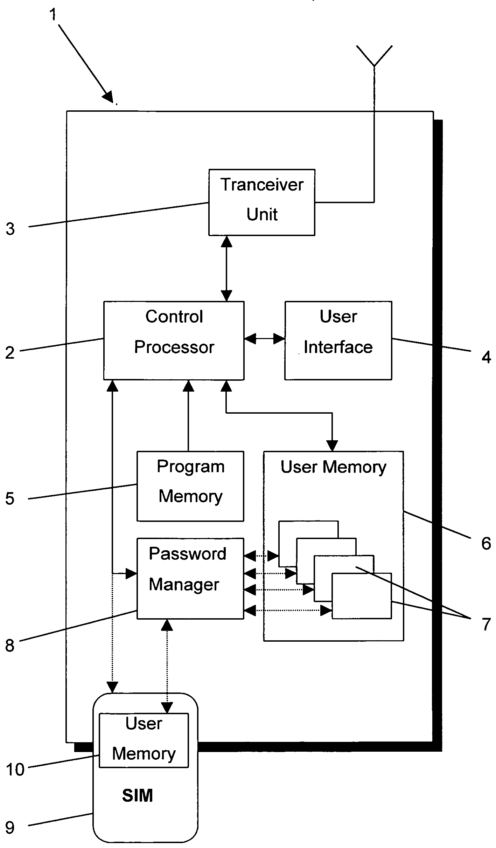

Figure 1 shows a simplified architecture of a mobile communication device according to the present invention.
Figure 2 shows a possible procedure for assigning a password to user data to be stored in the user memory of a mobile communication device.

The communication device 1 generally comprises a control processor 2, a transceiver unit 3, a user interface 4 including a keypad and a display, a program memory 5 including the operating system software and a user memory 6 in which the user can store personal data. The user memory 6 may be subdivided into several memory sections 7, e.g. represented by folders and subfolders in which user data such as MMS messages, photos, video clips, music files, etc. can be stored.
According to the present invention the operating system comprises a password management function 8. Whenever the user wishes to store data in the user memory 6 or sections 7 of it, or wishes to create a new folder or subfolder, the password management function 8 starts a dialog with the user via the user interface 4 whether a password should be assigned to the data to be stored or the folder / subfolder to be created.
During the dialog with the password management function 8, the user can choose and type in a password and can assign it to selected data files, folders and subfolders (memory sections 7).
The password can be a general password assigned to all files, folders and subfolders. It is also possible to assign a individual password to each data file, each folder or a group of folders.

Usually a mobile communication device is operated together with a subscriber identification module SIM 9. The SIM 9 includes an own user memory 10 to which - according to the invention - a password can be assigned controlled by the password management function 8.

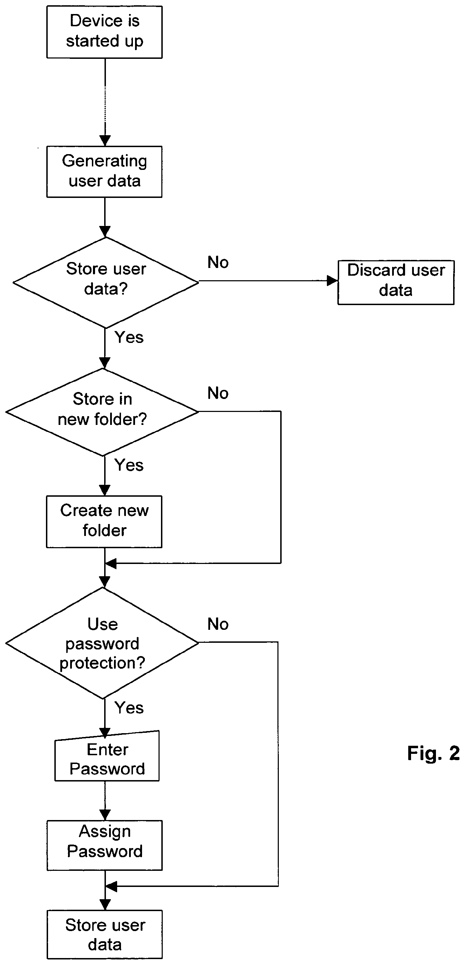

According to Figure 2 the mobile communication device is started up. During the operation of the communication device, the user may generate user data which he may wish to store in the user memory of the device. For this the user is questioned from the device whether he/she wishes to store that user data in the user memory. If the user refuses to store the user data it will be discarded.

If the user wishes to store the user data, he/she is questioned whether the data should be stored in a new folder. If the user answers with "Yes" a new folder is created within the user memory.
Subsequently, the user is questioned whether he/she likes to use a password to protect the user data to be stored. If the user refuses to use a password the user data are stored in the new folder without any password protection.
If the user wishes to use a password, he/she is requested to enter a password. This password is assigned to the user data and the user data are stored in the new folder protected by the assigned password.

### Reference Signs

- 1: Mobile Communication Device
- 2: Control Processor
- 3: Transceiver Unit
- 4: User Interface
- 5: Program Memory
- 6: User Memory
- 7: User Memory Section (Folders / Subfolders)
- 8: Password Management Function
- 9: Subscriber Identification Module
- 10: User Memory

## Claims

1. Method for securing personal data in a mobile communication device (1), the mobile communication device (1) comprises a control processor (2), a transceiver unit (3), an user interface (4) and an user memory (6) for storing user data, wherein the user memory is dividable into several memory sections (7), wherein a password is assignable to the user memory (6) or memory sections (7) of it, wherein the memory sections (7) comprises folders and subfolders,
**characterised in that** selected menus of the operating system of the mobile communication device are password protected, wherein the assignment of the password is controlled by a password management function (8), wherein whenever a user wishes to store data in the user memory (6) or sections (7) of it, or wishes to create a new folder or subfolder, the password management function (8) starts a dialog with the user via the user interface (4) whether a password should be assigned to the data to be stored or the folder / subfolder to be created.

2. Method according to claim 1, **characterised in that** a password is assignable to the user memory (10) of a subscriber identification module (9) operated with the mobile communication device (1).

3. Method according to any preceding claim, **characterised in that** each memory section (7) is protected by an individually password.

4. Method according to any preceding claim, **characterised in that** individual data files stored in the user memory sections (7) are password protected.

5. Method according to any preceding claim, **characterised in that** a single password is assigned to an individual folder / sub-folder, a group of user defined folders / subfolders or all folders / subfolders.

6. Method according to any preceding claim, **characterised in that** SMS, EMS or MMS menus are password protected.

7. Method according to any preceding claim, **characterised in that** the password is created from standard ASCII symbols.

8. Mobile communication device operable for securing personal data, the mobile communication device (1) comprises a control processor (2), a transceiver unit (3), an user interface (4), a user memory (6) for storing user data, the user memory (6) is dividable into several memory sections (7), and a password management function (8) by which a password is assignable to the user memory (6) or sections (7) of it or folders and subfolders of the memory sections (7), **characterised in that** it comprises selected menus of the operating system which are password protected, and a password managing function (8) for controlling the assignment of the password and starting a dialog with a user via the user interface (4) whether a password should be assigned to data to be stored or a folder / subfolder to be created whenever the user wishes to store data in the user memory (6) or sections (7) of it, or wishes to create a new folder or subfolder.

9. Mobile communication device according to claim 8, **characterised in that** the communication device comprises a subscriber identification module (9) including a user memory (10).

## Patentansprüche

1. Verfahren zum Absichern persönlicher Daten in einem mobilen Kommunikationsgerät (1), wobei das mobile Kommunikationsgerät (1) einen Steuerungsprozessor (2), eine Transceiver-Einheit (3), eine Benutzerschnittstelle (4) und einen Benutzerspeicher (6) zum Speichern von Daten umfasst, wobei der Benutzerspeicher in mehrere Speicherabschnitte (7) aufteilbar ist, wobei dem Benutzerspeicher (6) oder Speicherabschnitten (7) davon ein Passwort zuweisbar ist, wobei die Speicherabschnitte (7) Ordner und Unterordner umfassen,
**dadurch gekennzeichnet, dass** ausgewählte Menüs des Betriebssystems des mobilen Kommunikationsgeräts passwortgeschützt sind, wobei die Zuweisung des Passworts durch eine Passwortmanagementfunktion (8) gesteuert wird, wobei immer dann, wenn ein Benutzer in dem Benutzerspeicher (6) oder Abschnitten (7) davon Daten zu speichern wünscht oder einen neuen Ordner oder Unterordner anzulegen wünscht, die Passwortmanagementfunktion (8) mit dem Benutzer über die Benutzerschnittstelle (4) einen Dialog startet, ob den zu speichernden Daten oder dem anzulegenden Ordner / Unterordner ein Passwort zugewiesen werden soll.

2. Verfahren gemäß Anspruch 1, **dadurch gekennzeichnet, dass** dem Benutzerspeicher (10) eines Teilnehmeridentifikationsmoduls (9), das mit dem mobilen Kommunikationsgerät (1) betrieben wird, ein Passwort zuweisbar ist.

3. Verfahren gemäß einem der vorhergehenden Ansprüche, **dadurch gekennzeichnet, dass** jeder Speicherabschnitt (7) durch ein einzelnes Passwort geschützt ist.

4. Verfahren gemäß einem der vorhergehenden Ansprüche, **dadurch gekennzeichnet, dass** in den Speicherabschnitten (7) gespeicherte einzelne Datendateien passwortgeschützt sind.

5. Verfahren gemäß einem der vorhergehenden Ansprüche, **dadurch gekennzeichnet, dass** einem einzelnen Ordner / Unterordner, einer Gruppe von benutzerdefinierten Ordnern / Unterordnern oder allen Ordnern / Unterordnern ein einziges Passwort zugewiesen ist.

6. Verfahren gemäß einem der vorhergehenden Ansprüche, **dadurch gekennzeichnet, dass** SMS-, EMS- oder MMS-Menüs passwortgeschützt sind.

7. Verfahren gemäß einem der vorhergehenden Ansprüche, **dadurch gekennzeichnet, dass** das Passwort aus standardmäßigen ASCII-Zeichen erstellt wird.

8. Mobiles Kommunikationsgerät, das zum Absichern persönlicher Daten betreibbar ist, wobei das Kommunikationsgerät (1) einen Steuerungsprozessor (2), eine Transceiver-Einheit (3), eine Benutzerschnittstelle (4), einen Benutzerspeicher (6) zum Speichern von Daten, wobei der Benutzerspeicher (6) in mehrere Speicherabschnitte (7) aufteilbar ist, und eine Passwortmanagementfunktion (8) umfasst, durch die dem Benutzerspeicher (6) oder Abschnitten (7) davon oder Ordnern und Unterordnern der Speicherabschnitte (7) ein Passwort zuweisbar ist, **dadurch gekennzeichnet, dass** es ausgewählte Menüs des Betriebssystems umfasst, die passwortgeschützt sind, und eine Passwortmanagementfunktion (8) zum Steuern der Zuweisung des Passworts und zum Starten eines Dialogs mit einem Benutzer über die Benutzerschnittstelle (4), ob zu speichernden Daten oder einem anzulegenden Ordner / Unterordner ein Passwort zugewiesen werden soll, immer dann, wenn der Benutzer in dem Benutzerspeicher (6) oder Abschnitten (7) davon Daten zu speichern wünscht oder einen neuen Ordner oder Unterordner anzulegen wünscht.

9. Mobiles Kommunikationsgerät gemäß Anspruch 8, **dadurch gekennzeichnet, dass** das Kommunikationsgerät ein Teilnehmeridentifikationsmodul (9) umfasst, das einen Benutzerspeicher (10) enthält.

## Revendications

1. Procédé pour protéger les données personnelles dans un appareil mobile de communication (1), l'appareil mobile de communication (1) comprenant un processeur pilote (2), une unité d'émission-réception (3), une interface d'utilisateur (4) et une mémoire d'utilisateur (6) pour stocker des données d'utilisateur, la mémoire d'utilisateur étant apte à être divisée en plusieurs sections de mémoire (7), un mot de passe étant apte à être attribué à la mémoire d'utilisateur (6) ou à des sections de mémoire (7) de celle-ci, les sections de mémoire (7) comprenant des dossiers et des sous-dossiers,
**caractérisé en ce que** les menus sélectionnés du système d'exploitation de l'appareil mobile de communication sont protégés par mot de passe, l'attribution du mot de passe étant commandée par une fonction de gestion de mot de passe (8) ; quand un utilisateur souhaite stocker des données dans la mémoire d'utilisateur (6) ou dans des sections (7) de celle-ci ou souhaite créer un nouveau dossier ou sous-dossier, la fonction de gestion de mot de passe (8) entamant un dialogue avec l'utilisateur par l'intermédiaire de l'interface d'utilisateur (4) pour savoir si un mot de passe doit être attribué aux données à stocker ou au dossier/sous-dossier à créer.

2. Procédé selon la revendication 1, **caractérisé en ce qu'**un mot de passe est apte à être attribué à la mémoire d'utilisateur (10) d'un module d'identification d'abonné (9) exploité avec l'appareil mobile de communication (1).

3. Procédé selon l'une quelconque des revendications précédentes, **caractérisé en ce que** chaque section de mémoire (7) est protégée par un mot de passe individuel.

4. Procédé selon l'une quelconque des revendications précédentes, **caractérisé en ce que** des fichiers de données individuels stockés dans les sections de mémoire d'utilisateur (7) sont protégés par mot de passe.

5. Procédé selon l'une quelconque des revendications précédentes, **caractérisé en ce qu'**un mot de passe unique est attribué à un dossier/sous-dossier individuel, à un groupe de dossiers/sous-dossiers définis par l'utilisateur ou à tous les dossiers/sous-dossiers.

6. Procédé selon l'une quelconque des revendications précédentes, **caractérisé en ce que** des menus SMS, EMS ou MMS sont protégés par mot de passe.

7. Procédé selon l'une quelconque des revendications précédentes, **caractérisé en ce que** le mot de passe est créé à partir de symboles ASCII standard.

8. Appareil de communication mobile apte à être exploité pour protéger des données personnelles, l'appareil mobile de communication (1) comprenant un processeur pilote (2), une unité d'émission-réception (3), une interface d'utilisateur (4), une mémoire d'utilisateur (6) pour stocker des données d'utilisateur, la mémoire d'utilisateur (6) étant apte à être divisée en plusieurs sections de mémoire (7), et une fonction de gestion de mot de passe (8) grâce à laquelle un mot de passe est apte à être attribué à la mémoire d'utilisateur (6) ou à des sections de mémoire (7) de celle-ci ou à des dossiers et sous-dossiers des sections de mémoire (7), **caractérisé en ce qu'**il comprend des menus sélectionnés du système d'exploitation, qui sont protégés par mot de passe, et une fonction de gestion de mot de passe (8) pour commander l'attribution du mot de passe et entamer un dialogue avec un utilisateur par l'intermédiaire de l'interface d'utilisateur (4) pour savoir si un mot de passe doit être attribué à des données à stocker ou à un dossier/sous-dossier à créer, quand l'utilisateur souhaite stocker des données dans la mémoire d'utilisateur (6) ou dans des sections (7) de celle-ci ou souhaite créer un nouveau dossier ou sous-dossier.

9. Appareil mobile de communication selon la revendication 8, **caractérisé en ce que** l'appareil de communication comprend un module d'identification d'abonné (9) contenant une mémoire d'utilisateur (10).
